# EUROPÄISCHE PATENTSCHRIFT

(11) **EP 1 037 032 B1**
(45) Veröffentlichungstag und Bekanntmachung des Hinweises auf die Patenterteilung: **06.08.2008**
(21) Anmeldenummer: 00104759.6
(22) Anmeldetag: 04.03.2000
(51) Int. Cl.: G01N 1/06

(54) **Mikrotom**
Microtome
Microtome

(30) Priorität: 12.03.1999 DE 19911163
(43) Veröffentlichungstag der Anmeldung: 20.09.2000
(73) Patentinhaber: Leica Biosystems Nussloch GmbH, 69226 Nussloch (DE)
(72) Erfinder: Günther, Bernd, 74933 Neidenstein (DE); Vierling, Jürgen, 69214 Eppelheim (DE); Laudat, Andreas, 74909 Meckesheim (DE); Walter, Roland, 68804 Altlussheim (DE)
(74) Vertreter: Reichert, Werner Franz

(56) Entgegenhaltungen:
- WO-A-98/04898
- DE-A- 3 127 266
- DE-U- 8 809 096
- US-A- 5 065 657
- US-A- 5 226 335

## Beschreibung

Die Erfindung betrifft ein Mikrotom zur Herstellung von Dünnschnitten, bei dem der Schneidvorgang durch eine Relativbewegung zwischen einem Schneidmesser und einem Objekt ausgeführt wird, wobei zur Erzeugung dieser Relativbewegung ein Antrieb mit einem Antriebsmotor, einer Steuerschaltung und einem Handrad vorgesehen ist.

Mikrotome werden in zunehmendem Maße automatisiert, um die Dauerbelastung für die Bedienperson zu minimieren und gleichzeitig eine vereinfachte Handhabung sicherzustellen. Außerdem wird mit einem entsprechend automatisierten Mikrotom der Durchsatz der zu schneidenden Proben erhöht. Bei automatisierten Mikrotomen ist man beispielsweise dazu übergegangen, neben einer automatischen Zustellung des Objektes auf das Schneidmesser, auch den Antrieb zur Erzeugung einer Relativbewegung zwischen dem Objekt und dem Schneidmesser mit einem Motor auszustatten. Ein derartiges Mikrotom ist beispielsweise in der WO 98 04 898 A1 dargestellt und beschrieben.

Bei automatisch arbeitenden Mikrotomen hat es sich jedoch auch gezeigt, daß bei bestimmten Situationen nicht auf ein manuelles Eingreifen der Bedienperson verzichtet werden kann. So ist es beispielsweise nach einem Objektwechsel zur Ausrichtung des Objektes und beim erstmaligen Anschneiden des Objektes notwendig, den motorischen Antrieb möglichst langsam zu betreiben. Bei automatisierten Mikrotomen sind dazu jedoch nur Bedienpulte mit entsprechenden Schaltern vorgesehen. Über die Schalter kann nur in bedingtem Maße ein feinfühliger, manuell gesteuerter Antrieb realisiert werden.

Bei der Ausrichtung des Objektes ist es auch notwendig, daß das Objekt und das Schneidmesser aufeinander zugestellt werden, eine visuelle Kontrolle erfolgt, und dann eine geringe Rückstellung ausgeführt wird. Diese Freiheitsgrade werden zur Ausrichtung benötigt. Die erfolgte Ausrichtung wird dann durch erneutes Zustellen visuell überprüft und gegebenenfalls erneut korrigiert. Um einwandfreie Schnitte zu erhalten, muß diese Prozedur mit größtmöglicher Sorgfalt ausgeführt werden. Über einfache Kippschalter läßt sich ein motorisch angetriebenes Mikrotom für eine derartige Prozedur nur ungenügend genau ansteuern.

Die motorischen Antriebe sind außerdem mit dem Nachteil behaftet, daß sich im stromlosen Stand-by-Betrieb der Antrieb manuell bewegen läßt. Dies wird insbesondere bei einem Messer- oder Präparatwechsel gefährlich, da die Bedienperson mit der Hand an den Bauteilen Abrutschen und über den beweglichen Antrieb gegen die Messerschneide gezogen werden kann.

Aus der US 5 671 648 ist ein Mikrotom zur Herstellung von Dünnschnitten für die Mikroskopie bekannt. Dieses Mikrotom weist ein feststehendes Schneidmesser und einen auf einer drehbar gelagerten Scheibe angeordneten Objektträger mit dem zu schneidenden Objekt auf. Die Scheibe kann zur Zustellung des Objektes auf das Schneidmesser in ihrer Höhe verändert werden. Die Zustelleinrichtung ist mit einem Motor und einer Steuerschaltung ausgestattet. Als Antriebseinrichtung ist für die drehbare Scheibe eine getriebliche Verbindung mit einem Handrad vorgesehen. Zusätzlich kann im Mikrotom noch ein Antriebsmotor angeordnet werden, der mit dem Getriebe verbunden wird. Es bleibt in dieser Schrift offen, ob der Antriebsmotor das Handrad ersetzt und wie der Antriebsmotor angesteuert wird.

Aus der DE 88 09 096 U1 ist ein Mikrotom mit versenkbaren Bedienknöpfen vorgesehen, die mit einem Getriebe zur manuellen Einstellung der am Mikrotom wählbaren Parameter, wie Schnittdicke, Messerwinkel etc. verbunden sind. Das Getriebe ist hier mit einem elektronischen Generator verbunden, der die Drehbewegung an den Bedienknöpfen in entsprechende elektrische Signale umwandelt. Über eine Steuereinrichtung werden die Antriebsmotore zur Einstellung der Parameter gesteuert. Bei diesem Mikrotom ist kein motorischer Antrieb für die Paräparatschnitt vorgesehen, sondern lediglich ein herkömmlicher getrieblicher Antrieb über Handrad dargestellt.

Aus Dokument US 5 065 657 A ist ein Mikrotom mit einem Sicherheitsschalter für einen getrieblicher Antrieb mit einem Handrad bekannt.

Aus Dokument US 5 226 335 A ist die Verwendung eines Encoders in Verbindung mit einem Handrad eines Mikrotoms bekannt.

Ausgehend vom bekannten Stand der Technik ist es Aufgabe der vorliegenden Erfindung, den motorischen Antrieb eines Mikrotoms so weiterzubilden, daß auch ein feinfühliger, manuell gesteuerter Antrieb möglich wird und dabei auch im Stand-by-Betrieb eine hohe Bedienungssicherheit gegeben ist.

Diese Aufgabe wird erfindungsgemäß durch die im kennzeichnenden Teil des Patentanspruches 1 angegebenen Merkmale gelöst. Weitere vorteilhafte Weiterbildungen sind Gegenstand der Unteransprüche.

Das Mikrotom zeichnet sich dadurch aus, daß ein motorischer Antrieb zur Erzeugung der Relativbewegung zwischen dem Objekt und dem Schneidmesser über ein herkömmliches Handrad manuell gesteuert werden kann. Dazu wird das Handrad nicht über ein mechanisches Getriebe mit dem Motor gekoppelt, sondern es ist lediglich ein Encoder vorgesehen, der die Drehung am Handrad in entsprechende Signale umsetzt und an eine Steuerschaltung weiterleitet. In der Steuerschaltung werden die Signale ausgewertet und der Antriebsmotor entsprechend angesteuert. Mit dieser Ausgestaltung kann also weiterhin die gewohnt feinfühlige Bedienung des Antriebs erfolgen. Dies ist insbesondere dann von besonderem Vorteil, wenn nach einem Proben- oder Messerwechsel beide neu aufeinander ausgerichtet werden müssen. Durch geringfügige Handradbewegungen kann der Antrieb so feinfühlig vor und rückwärts bewegt werden. Außerdem wurde über die Steuerschaltung eine Blockierung des Antriebs immer dann realisiert, wenn vom Encoder keine Signale geliefert werden. In diesem Stand-by-Betrieb werden von der Bedienperson Eingriffe am Mikrotom vorgenommen und es besteht eine erhebliche Verletzungsgefahr am Schneidmesser. Durch ein automatisches Blockieren des Antriebs wird diese Gefahr minimiert.

Dabei kann der Antriebsmotor als Schrittmotor ausgebildet sein und die Blockierung des Antriebs durch eine ständige Bestromung des Schrittmotors über die Steuerschaltung erfolgen.

Es kann natürlich auch ein einfach aufgebauter DC-Antriebsmotor vorgesehen sein, wobei hier zur Blockierung des Antriebs der Motor über die Steuerschaltung entweder im Kurzschluß betrieben oder mit einem Haltestrom beaufschlagt wird.

In einer weiteren Ausgestaltung der Erfindung ist es vorgesehen, im Antrieb eine über die Steuerschaltung schaltbare elektromagnetische Bremse anzuordnen. Diese Bremse spricht grundsätzlich dann an, wenn der Antrieb stromlos geschaltet ist bzw. wenn kein Encodersignal vorliegt. Diese Bremse kann auch zusätzlich zu den bereits beschriebenen Blockierungen des Antriebs über den Antriebsmotor vorgesehen sein.

Als zusätzliche Sicherheitsmaßnahme hat es sich als vorteilhaft erwiesen, wenn die Leistung des Antriebsmotors über die Steuerschaltung begrenzt wird. So kann die Leistung des Motors beispielsweise in Abhängigkeit von der zu schneidenden Probe durch eine manuelle Vorgabe über ein Bedienpult eingestellt werden. Über diese Vorgabe wird dann in der Steuerschaltung der Maximalstrom des Antriebsmotors auf das notwendige Maß begrenzt.

Zur gewohnten Handhabung des Handrades kann diesem eine mechanische Schwungmasse zugeordnet sein. Das Handrad kann ferner mit einer mechanischen Bremse versehen sein, damit ein drehendes Handrad nicht über einen längeren Zeitraum nachlaufen kann. Dazu ist es vorgesehen, dem Handrad eine mechanische Bremse mit einer gegen das Mikrotom vorgespannten Feder zuzuordnen. Es können selbstverständlich auch andere kraftschlüssige Verbindungen eingesetzt werden.

Es ist ferner vorgesehen, über das Bedienpult einen Faktor vorzuwählen, der in der Steuerschaltung das Verhältnis der Encodersignale zur Motordrehzahl ändert. Selbstverständlich kann das Bedienpult auch Schalter für den motorischen Antrieb aufweisen, so daß nach der Einstellung und Justage des Schneidmessers zum Objekt, in die Betriebsart Serienschnitt umgeschaltet werden kann. In diesen Fällen wird der Antriebsmotor nicht mehr über eine Bewegung am Handrad gesteuert. Als Sicherheitsmaßnahme kann es jedoch auch vorgesehen sein, daß die Betriebsart Serienschnitt immer dann abgeschaltet wird, wenn der Encoder durch eine Handradbewegung wieder Signale an die Steuereinrichtung abgibt.

In einer weiteren Ausgestaltung der Erfindung kann der Antrieb des Mikrotoms zusätzlich einen Winkelcodierer aufweisen oder der Encoder als Inkrementalgeber mit Referenzsignal ausgebildet sein. Damit wird erreicht, daß sich die Stellung des Schneidmessers zum Objekt eindeutig identifizieren läßt. Dadurch ist es dann auch möglich, die Motordrehzahl und/oder die Motorleistung während eines Schneidzyklus über die Steuerschaltung zu variieren. So ist es von Vorteil, wenn während der motorischen Zustellung des Objektes zum Schneidmessers bzw. umgekehrt, eine hohe Motordrehzahl und/oder eine geringe Motorleistung gewählt wird und während des eigentlichen Schneidvorganges die Motordrehzahl verringert und/oder die Motorleistung erhöht wird.

In einer weiteren Ausgestaltung der Erfindung wird die Motordrehzahl und/oder die Motorleistung von der Steuerschaltung auf ein Minimum reduziert, wenn manuelle Eingriffe am Mikrotom, z.B. durch einen Objekt- oder Messerwechsel, notwendig werden. Diese Funktion kann durch die Steuereinrictung immer dann realisiert werden, wenn beispielsweise über das Bedienpult eine entsprechende Eingabe vorgenommen wird, oder wenn durch eine Rückwärtsbewegung des Handrades entsprechende Encodersignale von der Steuereinrichtung empfangen werden.

Die Erfindung wird anhand eines Ausführungsbeispiels mit Hilfe der schematischen Zeichnung näher erläutert. Es zeigen:
- Fig. 1 :: eine Ansicht des Mikrotoms mit einem Handrad und einem extern angeordneten Bedienpult
- Fig. 2 :: einen Prinzipdarstellung des Antriebs mit dem Handrad und der Steuerschaltung

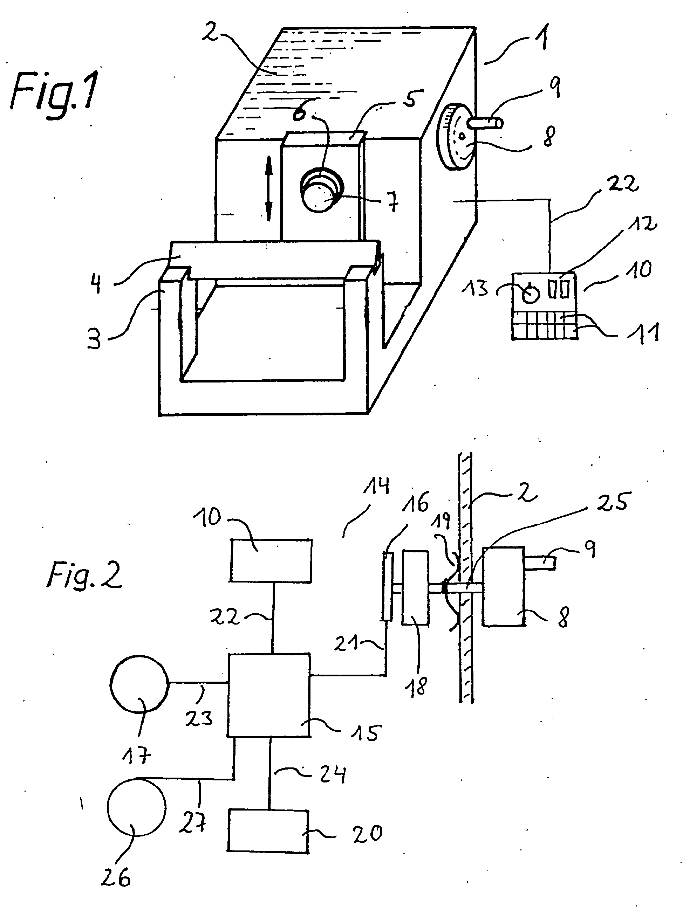

Die Figur 1 zeigt ein Mikrotom 1 mit einem Mikrotomgehäuse 2, einem Messerhalter 3 zur Aufnahme eines Schneidmessers 4. Ein Objekt 7 ist mit seinem Objekthalter 6 auf einem in Doppelpfeilrichtung beweglichen Schlitten 5 angeordnet. Am Mikrotom 1 ist ein drehbar gelagertes Handrad 8 mit einem Handgriff 9 angeordnet. Durch Drehen am Handrad 8 wird der Objektschlitten 5 bewegt und das Objekt 7 über die Schneide des Messers 4 geführt. Das Handrad 8 ist im Gegensatz zu herkömmlichen Mikrotomen nicht über ein Getriebe mit dem Objektschlitten 5, sondern mit einem im Innern des Mikrotoms 1 angeordneten Encoder 16 (Fig. 2) und einer dem Encoder nachgeordneten Steuerschaltung 15 (Fig. 2) verbunden. Die Steuerschaltung ist über eine Steuerleitung 22 an ein externes Bedienpult 10 angeschlossen. Das Bedienpult 10 weist ein Tastenfeld 11 für numerische Eingaben, einen Drehregler 13 für kontinuierlich veränderbare Eingaben und Schalter 12 zur Eingabe bestimmter Schaltstellungen und Betriebszustände auf.

Die Figur 2 zeigt eine Prinzipdarstellung des Antriebs 14 mit dem Handrad 8 und der Steuerschaltung 15. Das Handrad 8 ist auf einer Handradachse 25 angeordnet, die durch das Mikrotomgehäuse 2 geführt ist und an ihrem anderen Ende den Encoder 16 trägt. Auf der Handradachse 25 ist eine Feder 19 befestigt, die gegen das Mikrotomgehäuse 2 gespannt ist. Die als Bremse wirkende Feder 19 ist notwendig, damit das bewegte Handrad 8 nach einer gewissen Zeitspanne zum Stillstand kommt und das Nachlaufen des Handrads auf ein sinnvolles Maß beschränkt wird.

Außerdem trägt die Handradachse 25 eine Schwungmasse 18. Die auf der Handradachse 25 angeordnete Schwungmasse 18 ist notwendig, um einen möglichst gleichmäßigen Lauf des Handrades 8 bzw. des Encoders 16 zu gewährleisten.

Durch Drehung am Handrad 8 werden vom Encoder 16 entsprechende Signale über eine Steuerleitung 21 an die Steuerschaltung 15 abgegeben. Die Steuerschaltung 15 ist über eine Steuerleitung 23 mit einem Antriebsmotor 17 zur Bewegung des Objektschlittens 5 (Fig. 1) über ein nicht mit dargestelltes Getriebe verbunden. Entsprechend den Encodersignalen wird der Antriebsmotor 17 von der Steuerschaltung mit Strom beaufschlagt. Die Steuerschaltung 15 ist so ausgebildet, daß im Stand-by-Betrieb, es werden keine Encodersignale empfangen, der Antrieb 14 über die Steuerschaltung 15 blockiert wird. Dazu kann der Antriebsmotor 17 beispielsweise als Schrittmotor ausgebildet sein und ständig bestromt werden, oder der Antriebsmotor 17 ist als DC-Motor ausgebildet und wird mit einem Haltestrom beaufschlagt oder mit im Kurzschluß betrieben.

Zusätzlich oder alternativ kann es vorgesehen sein, daß eine, über eine Steuerleitung 27, an die Steuerschaltung 15 angeschlossene elektromagnetische Bremse 26 aktiviert wird.

In einer weiteren Ausgestaltung der Erfindung ist an die Steuerschaltung 15 ein Winkelcodierer 20 über eine Steuerleitung 24 angeschlossen. Über den Winkelcodierer 20 läßt sich die Stellung des Objekts zum Schneidmesser ermitteln.

Über das an die Steuerschaltung 15 angeschlossene Bedienpult 10 lassen sich verschiedene Parameter eingeben. So kann beispielsweise eine Leistungsbegrenzung und/oder eine Drehzahlbegrenzung des Antriebsmotors eingestellt werden. Diese Begrenzungen können auch innerhalb eines einzigen Schneidvorganges unterschiedliche Einstellungen haben. So soll der eigentliche Schneidvorgang langsam und mit großer Kraft ausgeführt werden, während bei der anschließenden erneuten Zustellung des Objektes auf das Schneidmesser die Leistung des Antriebsmotors begrenzt und die Drehzahl erhöht wird.

Außerdem kann über den Schalter 12 am Bedienpult 10 das Mikrotom 1 unabhängig von einer Betätigung des Handrades 8 in den Betriebszustand kontinuierlicher Serienschnitt versetzt werden.

Die Erfindung ist nicht auf ein Rotationsmikrotom beschränkt, sondern kann selbstverständlich auch in einem Scheibenmikrotom oder einem Schlittenmikrotom verwendet werden.

### Bezugszeichenliste

- 1 -: Mikrotom
- 2 -: Mikrotomgehäuse
- 3 -: Messerhalter
- 4 -: Schneidmesser
- 5 -: Objektschlitten
- 6 -: Objekthalter
- 7 -: Objekt
- 8 -: Handrad
- 9 -: Handgriff
- 10 -: Bedienpult
- 11 -: Tastaturfeld
- 12 -: Schalter
- 13 -: Drehregler
- 14 -: Antrieb
- 15 -: Steuerschaltung
- 16 -: Encoder
- 17 -: Antriebsmotor
- 18 -: Schwungmasse
- 19 -: Feder
- 20 -: Winkelcodierer
- 21 -: Steuerleitung 15 - 16
- 22 -: Steuerleitung 10 - 15
- 23 -: Steuerleitung 15 - 17
- 24 -: Steuerleitung 15 - 20
- 25 -: Handradachse
- 26 -: elektromagnetische Bremse
- 27 -: Steuerleitung 15 - 26

## Patentansprüche

1. Mikrotom (1) zur Herstellung von Dünnschnitten, bei dem der Schneidvorgang durch eine Relativbewegung zwischen einem Schneidmesser (4) und einem Objekt (7) ausgeführt wird, wobei zur Erzeugung dieser Relativbewegung ein Antrieb (14) mit einem Antriebsmotor (17), einer Steuerschaltung (15) und einem Handrad (8) vorgesehen ist, **dadurch gekennzeichnet, daß** das Handrad (8) mit einem Encoder (16) verbunden ist, der Encoder (16) beim Drehen des Handrades (8) entsprechende Signale an die Steuerschaltung (15) abgibt und die Steuerschaltung (15) den Antriebsmotor (17) den Signalen entsprechend ansteuert, und daß die Steuerschaltung (15) beim Fehlen von Encodersignalen den Antrieb (14) blockiert.

2. Mikrotom (1) nach Anspruch 1, **dadurch gekennzeichnet, daß** der Antriebsmotor (17) als Schrittmotor ausgebildet ist und der Schrittmotor zur Blockierung des Antriebs (14) über die Steuerschaltung (15) ständig bestromt wird.

3. Mikrotom (1) nach Anspruch 1, **dadurch gekennzeichnet, daß** der Antriebsmotor (17) als DC-Motor ausgebildet ist und der DC-Motor zur Blockierung des Antriebs (14) über die Steuerschaltung (15) entweder im Kurzschluß betrieben oder mit einem Haltestrom beaufschlagt wird.

4. Mikrotom (1) nach Anspruch 1 bis 3, **dadurch gekennzeichnet, daß** die Leistung des Antriebsmotors (17) über die Steuerschaltung (15) begrenzt wird.

5. Mikrotom (1) nach Anspruch 4, **dadurch gekennzeichnet, daß** Leistung des Antriebsmotors (17), in Abhängigkeit vom Material des zu schneidenden Objektes (7), über einen einstellbaren Maximalstrom begrenzt wird.

6. Mikrotom (1) nach Anspruch 1 bis 5, **dadurch gekennzeichnet, daß** zur Blockierung des Antriebs (14) eine über die Steuerschaltung (15) schaltbare elektromagnetische Bremse (26) vorgesehen ist.

7. Mikrotom (1) nach mindestens einem der vorherigen Ansprüche, **dadurch gekennzeichnet, daß** dem Handrad (8) mindestens eine Schwungmasse (18) zugeordnet ist.

8. Mikrotom (1) nach mindestens einem der vorherigen Ansprüche, **dadurch gekennzeichnet, daß** der Antrieb (14) eine mechanische Bremse (19) mit einer kraftschlüssigen Verbindung aufweist.

9. Mikrotom (1) nach Anspruch 8, **dadurch gekennzeichnet, daß** die kraftschlüssige Verbindung eine gegen das Mikrotomgehäuse (2) vorgespannte Feder (19) aufweist.

10. Mikrotom (1) nach mindestens einem der vorherigen Ansprüche, **dadurch gekennzeichnet, daß** das Verhältnis der Encodersignale zur Motordrehzahl über die Steuerschaltung (15) einstellbar ist.

11. Mikrotom (1) nach mindestens einem der vorherigen Ansprüche, **dadurch gekennzeichnet, daß** der Antrieb (14) zusätzlich einen Winkelcodierer (20) aufweist oder der Encoder (16) als Inkrementalgeber ausgebildet ist und so die Stellung des Schneidmessers (4) zum Objekt (7) über die Steuerschaltung (15) eindeutig identifizierbar ist.

12. Mikrotom (1) nach Anspruch 11, **dadurch gekennzeichnet, daß** die Motordrehzahl und/oder die Motorleistung während eines Schneidzyklus über die Steuerschaltung (15) variierbar ist.

13. Mikrotom (1) nach Anspruch 12, **dadurch gekennzeichnet, daß** über die Steuerschaltung (15) die Motordrehzahl während des Schneidvorganges gesenkt und nach dem Schneidvorgang wieder erhöht wird.

14. Mikrotom (1) nach Anspruch 13, **dadurch gekennzeichnet, daß** über die Steuerschaltung (15) die Motorleistung während des Schneidvorganges erhöht und nach dem Schneidvorgang wieder begrenzt wird.

15. Mikrotom (1) nach mindestens einem der vorherigen Ansprüche, **dadurch gekennzeichnet, daß** die Steuerschaltung (15) mit einem Bedienpult (10) zur manuellen Eingabe von veränderbaren Parametern zur Mikrotomsteuerung verbunden ist.

16. Mikrotom (1) nach Anspruch 15, **dadurch gekennzeichnet, daß** das Bedienpult (10) einen Schalter (12) für Serienschnitt ausweist und der Antriebsmotor (17) über diesen Schalter (12) und die Steuerschaltung (15) direkt angesteuert wird.

17. Mikrotom (1) nach mindestens einem der vorherigen Ansprüche, **dadurch gekennzeichnet, daß** über die Steuerschaltung (15) die Leistung und die Drehzahl des Antriebsmotors (17) auf ein Minimum einstellbar sind.

18. Mikrotom (1) nach mindestens einem der vorherigen Ansprüche, **dadurch gekennzeichnet, daß** das Mikrotom (1) als Scheibenmikrotom oder als Rotationsmikrotom oder als Schlittenmikrotom oder als Vibratom ausgebildet ist.

## Claims

1. Microtome (1) for producing thin sections, in the case of which microtome the cutting procedure is executed by a relative movement between a knife (4) and an object (7), there being provided for the purpose of producing this relative movement a drive (14) having a drive motor (17), a control circuit (15) and a handwheel (8), **characterized in that** the handwheel (8) is connected to an encoder (16), the encoder (16) outputs appropriate signals to the control circuit (15) upon rotation of the handwheel (8), and the control circuit (15) triggers the drive motor (17) in accordance with the signals, and **in that** the control circuit (15) blocks the drive (14) in the absence of encoder signals.

2. Microtome (1) according to Claim 1, **characterized in that** the drive motor (17) is designed as a stepping motor, and the stepping motor is continuously energized via the control circuit (15) in order to block the drive (14).

3. Microtome (1) according to Claim 1, **characterized in that** the drive motor (17) is designed as a DC motor, and the DC motor is either operated in short circuit or has a holding current applied to it in order to block the drive (14) via the control circuit (15).

4. Microtome (1) according to Claims 1 to 3,
**characterized in that** the power of the drive motor (17) is limited via the control circuit (15).

5. Microtome (1) according to Claim 4, **characterized in that** the power of the drive motor (17) is limited as a function of the material of the object (7) to be cut via an adjustable maximum current.

6. Microtome (1) according to Claims 1 to 5, **characterized in that** an electromagnetic brake (26) which can be switched via the control circuit (15) is provided in order to block the drive (14).

7. Microtome (1) according to at least one of the preceding claims, **characterized in that** at least one flywheel (18) is assigned to the handwheel (8).

8. Microtome (1) according to at least one of the preceding claims, **characterized in that** the drive (14) has a mechanical brake (19) with a friction locked connection.

9. Microtome (1) according to Claim 8, **characterized in that** the friction locked connection has a spring (19) biased against the microtome housing (2).

10. Microtome (1) according to at least one of the preceding claims, **characterized in that** the ratio of the encoder signals to the motor speed can be set via the control circuit (15).

11. Microtome (1) according to at least one of the preceding claims, **characterized in that** the drive (14) additionally has an angle coder (20), or the encoder (16) is designed as an incremental encoder, and so the setting of the knife (4) in relation to the object (7) can be identified uniquely via the control circuit (15).

12. Microtome (1) according to Claim 11, **characterized in that** the motor speed and/or the motor power can be varied during a cutting cycle via the control circuit (15).

13. Microtome (1) according to Claim 12, **characterized in that** the motor speed can be lowered during the cutting procedure, and raised again after the cutting procedure, via the control circuit (15).

14. Microtome (1) according to Claim 13, **characterized in that** the motor power is raised during the cutting procedure and limited again after the cutting procedure via the control circuit (15).

15. Microtome (1) according to at least one of the preceding claims, **characterized in that** the control circuit (15) is connected to a control panel (10) for the manual input of variable parameters relating to the microtome control.

16. Microtome (1) according to Claim 15, **characterized in that** the control panel (10) has a switch (12) for serial cutting, and the drive motor (17) is triggered directly via this switch (12) and the control circuit (15).

17. Microtome (1) according to at least one of the preceding claims, **characterized in that** the power and the speed of the drive motor (17) can be set to a minimum via the control circuit (15).

18. Microtome (1) according to at least one of the preceding claims, **characterized in that** the microtome (1) is designed as a disk microtome or as rotary microtome or as traversing microtome or as a vibratome.

## Revendications

1. Microtome (1) pour la production de coupes minces, dans lequel le processus de coupe est réalisé par un mouvement relatif entre un couteau de coupe (4) et un objet (7), ce mouvement relatif étant engendré par un entraînement (14) avec un moteur d'entraînement (17), un circuit de commande (15) et un volant de manoeuvre (8), **caractérisé en ce que** le volant de manoeuvre (8) est relié à un encodeur (16), l'encodeur (16) transmettant au circuit de commande (15) des signaux correspondants lorsqu'on tourne le volant de manoeuvre (8) et le circuit de commande (15) commandant le moteur d'entraînement (17) en fonction des signaux, et **en ce que** le circuit de commande (15) bloque l'entraînement (14) en absence de signaux d'encodage.

2. Microtome (1) selon la revendication 1, **caractérisé en ce que** le moteur d'entraînement (17) est réalisé sous la forme d'un moteur pas à pas et que le moteur pas à pas est alimenté en permanence pour le blocage de l'entraînement (14) par l'intermédiaire du circuit de commande (15).

3. Microtome (1) selon la revendication 1, **caractérisé en ce que** le moteur d'entraînement (17) est réalisé sous la forme d'un moteur à courant continu et que le moteur à courant continu est soit mis en court-circuit, soit alimenté par un courant d'arrêt pour le blocage de l'entraînement (14) par l'intermédiaire du circuit de commande (15).

4. Microtome (1) selon les revendications 1 à 3, **caractérisé en ce que** la puissance du moteur d'entraînement (17) est limitée par l'intermédiaire du circuit de commande (15).

5. Microtome (1) selon la revendication 4, **caractérisé en ce que** la puissance du moteur d'entraînement (17) est limitée par l'intermédiaire d'un courant maximal réglable en fonction du matériau de l'objet à couper (7).

6. Microtome (1) selon les revendications 1 à 5, **caractérisé en ce qu'**un frein électromagnétique (26) commutable est prévu pour le blocage de l'entraînement (14) par l'intermédiaire du circuit de commande (15).

7. Microtome (1) selon une au moins des revendications précédentes, **caractérisé en ce que** le volant de manoeuvre (8) est pourvu d'au moins un volant d'inertie (18).

8. Microtome (1) selon une au moins des revendications précédentes, **caractérisé en ce que** l'entraînement (14) comporte un frein mécanique (19) avec une liaison à friction.

9. Microtome (1) selon la revendication 8, **caractérisé en ce que** la liaison à friction comporte un ressort (19) précontraint contre le boîtier du microtome (2).

10. Microtome (1) selon une au moins des revendications précédentes, **caractérisé en ce qu'**il est possible de régler le rapport entre les signaux d'encodage et la vitesse de rotation du moteur par l'intermédiaire du circuit de commande (15).

11. Microtome (1) selon une au moins des revendications précédentes, **caractérisé en ce que** l'entraînement (14) comporte de plus un codeur angulaire (20) ou que l'encodeur (16) est réalisé sous la forme d'un actionneur incrémental, permettant d'identifier ainsi explicitement la position du couteau de coupe (4) par rapport à l'objet (7) par l'intermédiaire du circuit de commande (15).

12. Microtome (1) selon la revendication 11, **caractérisé en ce qu'**il est possible de faire varier la vitesse de rotation du moteur et/ou la puissance du moteur pendant un cycle de coupe par l'intermédiaire du circuit de commande (15).

13. Microtome (1) selon la revendication 12, **caractérisé en ce qu'**on diminue la vitesse de rotation du moteur pendant le processus de coupe et qu'on l'augmente à nouveau après le processus de coupe, par l'intermédiaire du circuit de commande (15).

14. Microtome (1) selon la revendication 13, **caractérisé en ce qu'**on augmente la puissance du moteur pendant le processus de coupe et qu'on la limite à nouveau après le processus de coupe, par l'intermédiaire du circuit de commande (15).

15. Microtome (1) selon une au moins des revendications précédentes, **caractérisé en ce que** le circuit de commande (15) est relié à pupitre de commande (10) pour la saisie manuelle de paramètres variables pour la commande du microtome.

16. Microtome (1) selon la revendication 15, **caractérisé en ce que** le pupitre de commande (10) comporte un interrupteur (12) pour des coupes en série et que le moteur d'entraînement (17) est directement commandé par l'intermédiaire de cet interrupteur (12) et du circuit de commande (15).

17. Microtome (1) selon une au moins des revendications précédentes, **caractérisé en ce que** la puissance et la vitesse de rotation du moteur d'entraînement (17) peuvent être réglées à un minimum par l'intermédiaire du circuit de commande (15).

18. Microtome (1) selon une au moins des revendications précédentes, **caractérisé en ce que** le microtome (1) est réalisé sous la forme d'un microtome à disque ou d'un microtome rotatif ou d'un microtome à chariot ou d'un vibratome.
